# FASCICULE DE BREVET EUROPEEN

(11) **EP 4 028 248 B1**
(45) Date de publication et mention de la délivrance du brevet: **25.10.2023**
(21) Numéro de dépôt: 20797156.5
(22) Date de dépôt: 11.09.2020
(51) Int. Cl.: B29C 70/24, B29C 70/48, B29C 33/50, B29C 70/46, B29C 70/54, B29D 99/00, B29L 31/08, F01D 5/28, F01D 9/04, F01D 25/16, B29B 11/16

(54) **DISPOSITIF DE FABRICATION D'UNE PIECE CREUSE ET UNE TELLE PIECE CREUSE**
VERFAHREN ZUR HERSTELLUNG EINES HOHLTEILS UND EIN SOLCHES HOHLTEIL
METHOD FOR MANUFACTURING A HOLLOW PART AND SUCH A PART

(30) Priorité: 13.09.2019 FR 1910118
(43) Date de publication de la demande: 20.07.2022
(73) Titulaire: SAFRAN, 75015 Paris (FR)
(72) Inventeur: OBERT, Enrico Giovanni, 77550 MOISSY-CRAMAYEL (FR); TOUZE, Adrien, 77550 MOISSY-CRAMAYEL (FR)
(74) Mandataire: Gevers & Orès
(86) Numéro de dépôt international: PCT/FR2020/051576
(87) Numéro de publication internationale: WO 2021/048508

(56) Documents cités:
- FR-A1- 2 559 423
- FR-A1- 3 013 252
- US-A1- 2016 082 674

## Description

### Domaine technique de l'invention

La présente invention se rapporte à un procédé de fabrication d'une pièce creuse en matériau composite pour une turbomachine d'aéronef. La présente invention se rapporte encore à un élément aubagé profilé, tel qu'une aube de stator, obtenu par un tel procédé et un outillage permettant dans mise en oeuvre de ce procédé.

### Arrière-plan technique

L'état de la technique comprend notamment les documents US-A1 - 2016/082674, FR-A1-2 559 423 et FR-A1-3 013 252 A1.

Les turbomachines conventionnelles à double flux peuvent comporter plusieurs types de stators. Dans la veine de flux primaire, elles comportent des stators dont les aubes, du fait de leurs dimensions réduites, sont réalisées sous la forme d'éléments métalliques monobloc ou assemblés, qui sont réalisés par un procédé de fonderie. La rigidité de ces aubes est assurée par une quantité de métal conséquente ou une géométrie 3D ajustée destinée à leur apporter la rigidité nécessaire.

La problématique est différente dans le cas d'aubes de guidage ou OGV, acronyme anglo-saxon de « Outlet Guide Vanes » situées dans la veine de flux secondaire de la turbomachine, car il s'agit d'aubes de grandes dimensions pour lesquelles il n'est pas concevable de les réaliser par l'intermédiaire d'un procédé de fonderie, car les grandes quantités de métal qui seraient alors employées leur conféreraient une masse extrêmement élevée ce qui a pour effet d'alourdir la turbomachine et d'en dégrader les performances aérodynamiques. Il a également été proposé des OGV métalliques présentant une âme creuse, de tels OGV présentant cependant une masse toujours insatisfaisante.

Les aubes OGV peuvent encore être réalisées en matériaux composites. Il s'agit par exemple d'aubes réalisées par drapages successifs, autour d'une âme centrale réalisée en un matériau de type mousse ou nid d'abeille, de plis de tissu composite pré-imprégnés, ces plis faisant par la suite l'objet d'une opération de polymérisation. Il peut aussi s'agir d'aubes réalisées par tissage en trois dimensions de préformes en tissu à base de fibres de carbone, puis par injection de résine dans ces préformes, puis polymérisation des préformes ainsi imprégnées.

Cette structure en composite offre un bon rapport résistance mécanique/masse qui n'est toutefois pas suffisant pour des turbomachines présentant d'importants diamètres, et par conséquent des OGV de très grandes dimensions. En effet, au-delà d'un certain diamètre de la turbomachine, un OGV en composite ainsi réalisé présente une masse similaire à un OGV en métal creux.

La présente invention vise donc à proposer une solution permettant d'optimiser le gain en masse et de réduire le coût de fabrication d'une telle structure composite.

### Résumé de l'invention

A cet effet, l'invention concerne un procédé de fabrication d'une pièce creuse en matériau composite pour une turbomachine d'aéronef, ce procédé comprenant les étapes suivantes :
a) on réalise une préforme par tissage en trois dimensions de fils ;
b) on découpe ladite préforme tissée de sorte à ménager une déliaison interne ;
c) on déforme ladite préforme découpée de sorte à ménager un orifice à partir de la déliaison interne, la préforme déformée comprenant alors une première extrémité ouverte et une seconde extrémité ouverte opposée à la première extrémité ;
d) on place ladite préforme déformée dans un moule d'injection ;
e) on injecte dans ledit moule d'injection un liant comprenant une résine afin d'imprégner toute la préforme déformée ;
f) on polymérise la résine ; et
g) on sort du moule une pièce composite ;
h) on positionne un mandrin souple présentant une forme prédéterminée dans l'orifice ménagé dans la préforme déformée à partir de l'une des première et seconde extrémités ouvertes avant l'étape e) d'injection de la résine ;
i) on retire le mandrin souple à partir de l'une des première et seconde extrémités ouvertes après l'étape f) de polymérisation de la résine ou après l'étape g) de démoulage, la pièce en composite présentant alors un noyau creux.

Le procédé selon l'invention permet ainsi de réaliser des pièces structurales qui présentent toutes les propriétés des pièces composites et leurs avantages, tout en garantissant un gain de masse encore plus important par rapport à des pièces composites pleines ou encore à des pièces métalliques. En outre, le procédé permet d'obtenir des pièces qui sont plus creuses là où elles sont moins sollicitées mécaniquement et réciproquement de manière à optimiser les propriétés mécaniques des pièces dans les zones les plus chargées

Avantageusement, le procédé comprend une étape préliminaire de traitement du mandrin souple au moyen d'un démoulant liquide.

Ceci facilite le démoulage du mandrin souple à l'étape i) de retrait.

De préférence, le procédé comprend encore, après l'étape c) de déformation de la préforme découpée, une étape c') de positionnement d'un élément de remplissage au niveau de l'autre des première et seconde extrémités ouvertes, les étapes h) de positionnement du mandrin souple et i) de retrait du mandrin souple se faisant par l'extrémité ouverte opposée.

Cet élément de remplissage (ou « gap filler » en langue anglaise) permet de combler l'ouverture au niveau de l'autre des première et seconde extrémités ouvertes de sorte à avoir assurer son étanchéité.

De préférence et avantageusement, le procédé comprend encore, après l'étape c') de positionnement d'un élément de remplissage au niveau de ladite l'autre des première et seconde extrémités ouvertes, une étape c") de positionnement d'une contre-plaque au niveau de l'autre des première et seconde extrémités ouvertes.

Avantageusement, le procédé comprend une étape j) de fermeture de l'une des première et seconde extrémités ouvertes de la pièce creuse en composite de sorte à garantir l'étanchéité de la pièce creuse ainsi formée.

Selon un exemple de mise en oeuvre, l'étape j) de fermeture de l'une des première et seconde extrémités ouvertes de la pièce creuse est réalisée par bouchage au moyen d'une résine à froid.

Selon un autre exemple de mise en oeuvre, l'étape j) de fermeture de l'une des première et seconde extrémités ouvertes de la pièce creuse est réalisée par collage d'une contre-plaque préformée en composite.

La présente invention concerne encore un élément aubagé profilé, tel qu'une aube de stator, pour un ensemble propulsif, caractérisé en ce qu'il est obtenu selon le procédé de l'une quelconque des revendications 1 à 7.

Un tel élément aubagé présente un rapport résistance mécanique/masse encore plus optimisé par rapport aux éléments aubagés pleins de l'état de la technique.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique, en coupe longitudinale, d'un ensemble propulsif ;
[Fig. 2] La figure 2 est une vue en perspective d'une aube d'un carter intermédiaire de l'ensemble propulsif, l'aube comprenant une pale ;
[Fig. 3] La figure 3 est une vue en section transversale schématique d'une pale selon l'invention ;
[Fig. 4a] La figure 4a est une vue analogue à la figure 3, montrant une préforme tridimensionnelle ;
[Fig. 4b] La figure 4b est une vue analogue à la figure 4a, montrant la préforme tridimensionnelle présentant une déliaison interne ;
[Fig. 4c] La figure 4c est une vue analogue à la figure 4a, montrant la préforme tridimensionnelle en cours de déformation ;
[Fig. 5] La figure 5 est une vue à caractère schématique en coupe longitudinale d'une aube selon l'invention dans laquelle le mandrin est inséré ;
[Fig. 6] La figure 6 est une vue à caractère schématique en coupe radiale d'une aube selon l'invention dans laquelle le mandrin est inséré ;
[Fig. 7] La figure 7 est une vue analogue à la figure 8 montrant le mandrin en cours de retrait ;
[Fig. 8] La figure 8 est une vue de détail d'une aube et d'un outillage selon l'invention.

### Description détaillée de l'invention

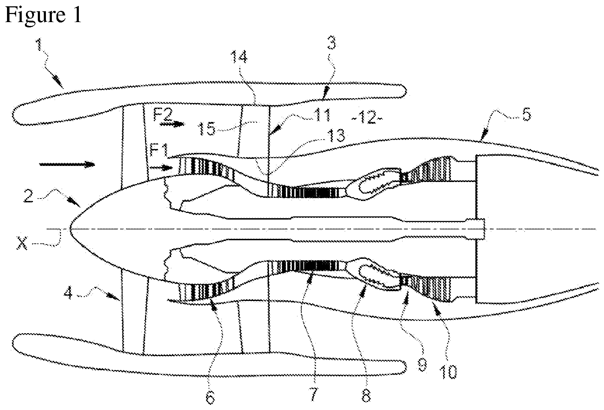

Sur la figure 1 est représenté un ensemble propulsif 1, notamment pour aéronef, comprenant une turbomachine à double flux 2 intégré dans un carter externe 3 annulaire. La turbomachine 2 comprend d'amont en aval dans le sens d'écoulement des gaz, une soufflante 4 et un générateur de gaz 5 comportant un ou plusieurs étages de compresseur, basse pression 6 et haute pression 7, une chambre de combustion 8, un ou plusieurs étages de turbine, haute pression 9 puis basse pression 10, et une tuyère d'échappement. Les rotors de la turbomachine 2 sont mobiles en rotation autour d'un axe longitudinal X de la turbomachine 2.

Dans le cas présent, le carter externe 3 comprend notamment un carter de soufflante, un carter intermédiaire 11 et une nacelle.

Par convention dans la présente demande, on entend par « longitudinalement » ou « longitudinal » toute direction parallèle à l'axe X, et par « radialement » ou « radial » toute direction perpendiculaire à l'axe X. De même, par convention dans la présente demande, les termes « interne » et « externe » sont définis radialement par rapport à l'axe X.

Le flux d'air entraîné par la soufflante 4 est séparé en un flux d'air primaire F1 pénétrant dans le générateur de gaz 5 de la turbomachine 2 et un flux d'air secondaire F2 participant de manière prépondérante à la poussée fournie par la turbomachine 2. Le flux d'air secondaire F2 s'écoule autour du générateur de gaz 5 dans une veine secondaire 12.

Le carter intermédiaire 11 est situé longitudinalement entre le compresseur basse pression 6 et le compresseur haute pression 7, ce carter 11 comprenant une virole interne 13, et une virole externe 14 s'étendant autour de la virole interne 13 et formant avec cette dernière une portion 32 de la veine secondaire 12. La virole externe 14 est reliée rigidement à la virole interne 13 par des bras 15 sensiblement radiaux par rapport à l'axe longitudinal X de la turbomachine 2, répartis de manière uniforme, et entre lesquelles se trouvent des aubes de guidage 16 dites OGV pour « Outlet Guide Vane ».

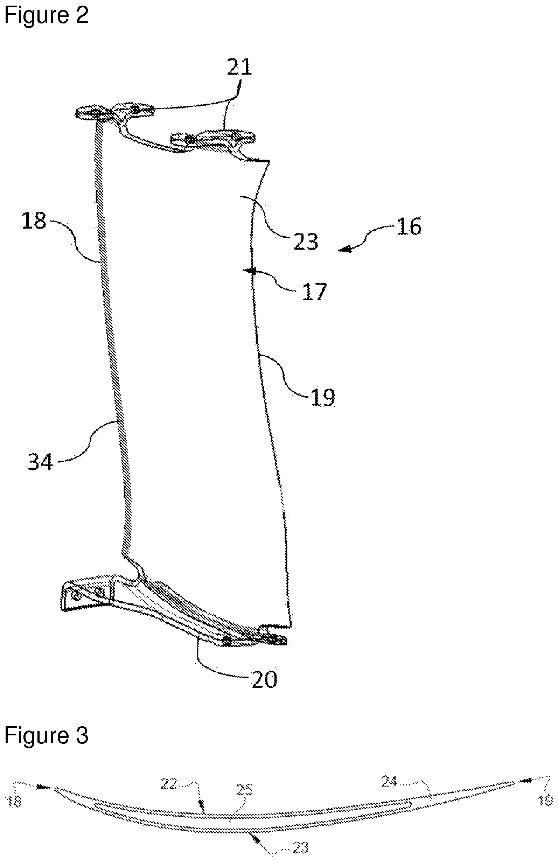

Tel qu'illustré sur la figure 2, l'aube OGV 16 comprend une pale 17 à profil aérodynamique, de forme allongée, délimitée longitudinalement par un bord d'attaque 18 disposé en amont suivant le sens d'écoulement des gaz dans le carter intermédiaire 11, et par un bord de fuite 19 opposé au bord d'attaque 18. La pale 17 est délimitée en outre radialement entre une plateforme interne 20 et une plateforme externe 21. Plus précisément, les plateformes interne 20 et externe 21 sont respectivement destinées à être montées sur les viroles interne 13 et externe 14 du carter intermédiaire 11. La pale 17 est latéralement délimitée par une face intrados 22 et une face extrados 23, ces faces intrados 22 et extrados 23 reliant le bord d'attaque 18 et le bord de fuite 19. Les faces intrados 22 et extrados 23 sont incurvées, et respectivement concave et convexe.

La pale 17 comprend, structurellement, une enveloppe 24 en matériau composite formée et un noyau creux 25 interne de forme allongée, reproduisant sensiblement la forme de l'enveloppe 24. Le noyau creux 25 à réaliser dans l'aube 16 peut ainsi présenter une forme tridimensionnelle complexe du fait des surfaces extérieures (intrados 22 et extrados 23) qui présentent une fonction aérodynamique. Le noyau creux 25 est également apte à absorber les variations d'épaisseur de l'enveloppe 24 afin de maintenir une épaisseur sensiblement constante sur les parois (intrados 22 et extrados 23 de l'enveloppe 24.

Selon l'exemple illustré, l'invention s'applique à une aube OGV 16 mais elle pourrait être appliquée aux différents éléments aubagés profilés (de rotor ou de stator) compris dans l'ensemble propulsif 1 ou à toute pièce composite comprenant une enveloppe externe présentant une forme complexe et un noyau creux.

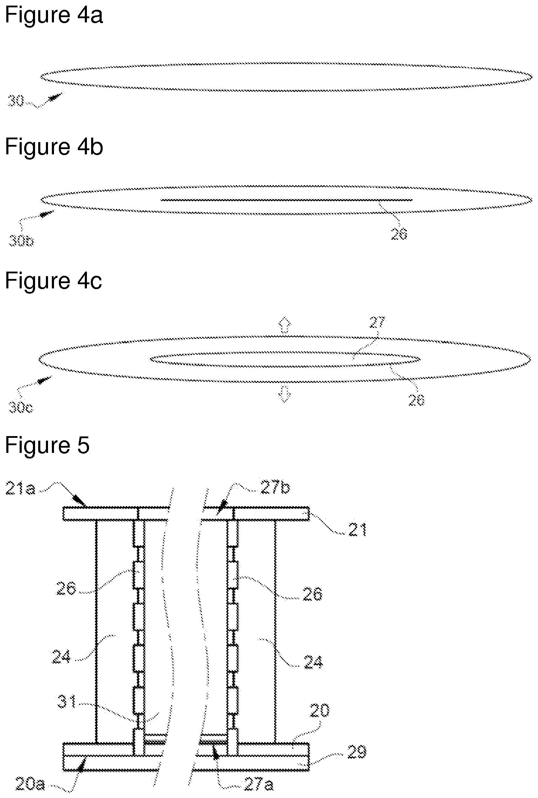

Le procédé de fabrication d'une aube OGV 16 va maintenant être décrit en référence aux figures 4a à 8.

Le procédé conforme à la présente invention est réalisé à partir d'une préforme 30a telle que celle résultant d'un tissage en trois dimensions réalisé, par exemple conformément au document FR 2 861 143. Ainsi, la première étape a) du procédé consiste à réaliser une telle préforme 30a tridimensionnelle par tissage (illustrée en coupe transversale à la figure 4a), qui comporte des fils de chaîne et des fils de trame. Dans ces deux groupes de fils, on prévoit des fils traceurs identifiables visuellement des autres et situés régulièrement au moins à la surface de la préforme. Avantageusement, ladite préforme est formée de fils de chaîne et de fils de trame, la direction des fils de chaîne formant la direction longitudinale de la préforme, ladite préforme comporte au moins une première partie formant la pale 17 de l'aube 16, une deuxième partie formant la plateforme interne 20 de l'aube 16 et une troisième partie formant la plateforme externe 21 de l'aube 16.

Les fils de tissage appartiennent au groupe formé des fibres de carbone, des fibres de verre, des fibres de silice, des fibres de carbure de silicium, des fibres d'alumine, des fibres aramides et des fibres de polyamides aromatiques.

Cette préforme 30a tissée d'une seule pièce est ensuite découpée conformément à l'étape b) du procédé selon l'invention. Plus exactement, cette préforme 30a tissée est découpée de sorte à ménager une déliaison interne 26. Cette découpe peut être réalisée par tout moyen connu en soi tel que par exemple par découpe au laser. On aboutit ainsi à une préforme découpée 30b montrée en coupe transversale sur la figure 4b.

Cette déliaison interne 26 permet la déformation de la préforme découpée 30b à l'étape c) du procédé selon l'invention de sorte ménager un orifice 27, amorce du noyau creux 25 de l'aube 16. Cet orifice 27 est traversant longitudinalement de sorte à créer une première extrémité ouverte 27a au niveau de la plateforme interne 20 et une seconde extrémité ouverte 27b opposée à la première extrémité, autrement dit au niveau de la plateforme externe 21. On obtient ainsi une préforme déformée 30c montrée en coupe transversale sur la figure 4c.

Avantageusement, il est possible de combler la première extrémité ouverte 27a au niveau de la plateforme interne 20. Ainsi, le procédé selon l'invention peut comprendre, après l'étape c) de déformation de la préforme découpée 30b permettant d'obtenir la préforme déformée 30c, une étape c') de positionnement d'un élément de remplissage 28 au niveau de la première extrémité ouverte 27a. Cet élément de remplissage 28 (encore connu sous l'appellation « gap filler » en langue anglaise) se présente sous forme d'une tresse de carbone et permet de réaliser l'étanchéité de cette première extrémité ouverte 27a.

De plus, la plateforme interne 20 étant la plus sollicitée mécaniquement, il peut encore être avantageux d'utiliser une contre-plaque 29 permettant d'augmenter sa robustesse mécanique. Ainsi, le procédé selon l'invention peut encore comprendre, après l'étape c') de positionnement d'un élément de remplissage 28 au niveau de la première extrémité ouverte 27a, une étape c") de positionnement d'une contre-plaque 29 au niveau de cette première extrémité ouverte 27a, contre une surface interne 20a de la plateforme interne 20.

L'élément de remplissage 28 positionné de sorte à affleurer la surface interne 20a de la plateforme interne 20 procure une surface sensiblement plane lors du positionnement de la contre-plaque 29 contre la surface interne 20a de la plateforme interne 20.

La préforme déformée 30c, ainsi munie de l'élément de remplissage 28 et de la contre plaque 29 au niveau de la première extrémité ouverte 27a est ensuite placée dans un moule d'injection à une étape d).

La préforme déformée 30c est maintenue dans le moule d'injection selon tout moyen connu en soi.

On positionne ensuite, lors d'une étape h) un mandrin souple 31 présentant une forme prédéterminée dans l'orifice 27 ménagé dans la préforme déformée 30c. L'insertion du mandrin souple 31 dans l'orifice 27 se fait à partir de la seconde extrémité ouverte 27b opposée à la première extrémité ouverte 27a.

Avantageusement, le mandrin souple 31 présente une forme sensiblement identique à la forme du noyau creux 25 à réaliser à l'intérieur de l'aube 16. La forme complexe de l'aube 16 et les épaisseurs des parois de l'enveloppe 24 de l'aube 16 induisent l'utilisation d'un mandrin 31 souple car un tel mandrin qui serait rigide serait indémoulable (lors d'une étape i) de retrait du mandrin souple décrite ci-après), de par ses formes également complexes.

Le mandrin souple 31 est également configuré pour compacter la préforme déformée 30c à l'intérieur de laquelle il est inséré à une épaisseur prédéterminée. En particulier, la préforme est compactée entre un moule extérieur rigide et un noyau en silicone situé au milieu.

Lors d'une étape e) on injecte dans le moule d'injection comprenant la préforme déformée 30c dans laquelle est inséré le mandrin souple 31 un liant comprenant une résine afin d'imprégner toute la préforme déformée 30c. Ce liant est par exemple injecté dans le moule d'injection à partir de la plateforme interne 20.

Si une contre-plaque 29 est positionnée contre la surface interne 20a de la plateforme interne 20 de l'aube 16, alors cette contre-plaque est également co-injectée de liant à l'étape e).

La présence de l'élément de remplissage 28 permet d'assurer la fonction d'étanchéité de l'aube 16 au niveau de la plateforme interne 20 dès l'étape e) d'injection. Cette étape d'injection est connue en soi dans les procédé de fabrication de pièces en matériaux composites par moulage par transfert de résine (connu sous l'acronyme RTM pour « Resin Transfert Molding » en langue anglaise). Le liant injecté est alors polymérisé de manière connue en soi lors d'une étape f).

Le mandrin souple 31 est maintenu en position à l'intérieur de la préforme déformée 30c pendant les étapes e) d'injection et f) de polymérisation du liant. Le mandrin souple 31 est avantageusement configuré pour résister à la pression d'injection du liant injecté à l'étape e. Le mandrin souple 31 est par exemple en silicone.

Après l'étape f) de polymérisation on sort l'aube 16 composite du moule d'injection à l'étape g).

Le retrait du mandrin souple 31 lors d'une étape i) peut se faire :
- soit après l'étape f) de polymérisation de la résine,
- soit après l'étape g) de démoulage de l'aube 16.

Après cette étape i) de retrait du mandrin souple 31, l'aube 16 en composite présente le noyau creux 25.

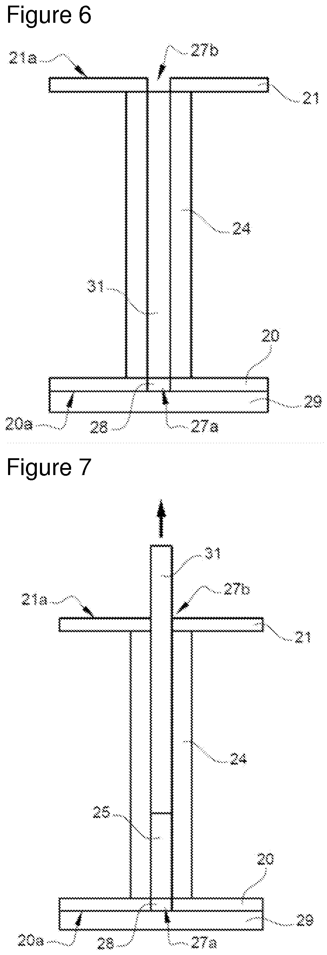

Le retrait du mandrin souple 31 hors du noyau creux 25 se fait à partir de la seconde extrémité ouverte 27b opposée à la première extrémité ouverte 27a, ce mouvement de retrait étant illustré par la flèche à la figure 7. Le mandrin souple 31 est encore configuré pour présenter des propriétés en traction lui conférant la résistance au déchirement nécessaire lors de l'étape i) de retrait l'opération de démoulage.

Pour faciliter le démoulage du mandrin souple 31 lors de l'étape i) de retrait, il est avantageux de traiter, au préalable, le mandrin souple 31 au moyen d'un démoulant liquide afin d'éviter tout collage entre le mandrin souple 31 et la résine injectée à l'étape e).

La souplesse du mandrin souple 31 permet de le retirer aisément du noyau creux 25 même si ce dernier présente des formes complexes.

Avantageusement, le mandrin souple 31 peut présenter une sur-longueur 31a facilitant la manipulation du mandrin souple 31, notamment lors de l'étape i) de retrait.

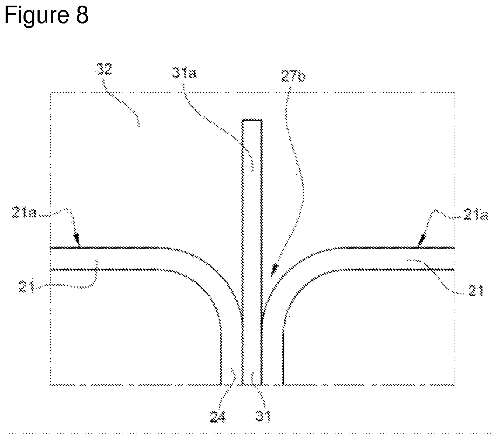

Le moule d'injection permettant la mise en oeuvre du procédé selon l'invention peut alors avantageusement comprendre un insert 32 configuré pour être positionné au niveau de la seconde extrémité ouverte 27b en regard de la surface externe 21a de la plateforme 21, de sorte à entourer la sur-longueur 31a lorsque le mandrin souple 31 est positionné à l'intérieur de l'orifice 27 de la préforme déformée 30c, comme illustré à la figure 8. L'insert 32 permet d'assurer l'étanchéité à l'injection de la sur-longueur 31a du mandrin souple 31. Ainsi, la sur-longueur 31a n'est pas imprégnée de liant lors de l'étape e) d'injection de sorte le mandrin souple 31 est aisément accessible pour l'étape i) de retrait.

Selon un exemple de réalisation non représenté, l'insert 32 comprend des canaux d'injection du liant dans le moule d'injection à l'étape e) d'injection.

Enfin, la seconde extrémité ouverte 27b de l'aube 16 est fermée lors d'une une étape j) de sorte à garantir l'étanchéité de l'aube creuse 16 ainsi formée. Cette fermeture peut par exemple être réalisée, soit par bouchage au moyen d'une résine à froid, soit par fixation, par exemple par collage, d'une contre-plaque (non représentée) préformée en composite, contre une surface externe 21a de la plateforme interne 20.

Selon un autre exemple de réalisation, la contre-plaque 29 pourrait ne pas être insérée dans le moule d'injection avec la préforme déformée 30 mais pourrait être rapportée après la fabrication de l'aube 16. Une contre-plaque composite (déjà injectée de liant) pourrait alors être fixée, de manière connue en soi, par exemple par collage, contre la surface interne 20a de la plateforme interne 20.

## Revendications

1. Procédé de fabrication d'une pièce creuse (16) en matériau composite pour une turbomachine d'aéronef, ce procédé comprenant les étapes suivantes :
a) on réalise une préforme (30a) par tissage en trois dimensions de fils ;
b) on découpe ladite préforme tissée (30a) de sorte à ménager une déliaison (26) interne ;
c) on déforme ladite préforme découpée (30b) de sorte à ménager un orifice (27) à partir de la déliaison (26) interne, la préforme déformée (30c) comprenant alors une première extrémité ouverte (27a) et une seconde extrémité ouverte (27b) opposée à la première extrémité (27a) ;
d) on place ladite préforme déformée (30c) dans un moule d'injection ;
e) on injecte dans ledit moule d'injection un liant comprenant une résine afin d'imprégner toute la préforme déformée (30c) ;
f) on polymérise la résine ; et
g) on sort du moule une pièce composite (16) ;
h) on positionne un mandrin souple (31) présentant une forme prédéterminée dans l'orifice (27) ménagé dans la préforme déformée (30c) à partir de l'une (27b) des première et seconde extrémités ouvertes (27a, 27b) avant l'étape e) d'injection de la résine ;
i) on retire le mandrin souple (31) à partir de l'une (27b) des première et seconde extrémités ouvertes (27a, 27b) après l'étape f) de polymérisation de la résine ou après l'étape g) de démoulage, la pièce en composite (16) présentant alors un noyau creux (25).

2. Procédé selon la revendication précédente, **caractérisé en ce qu'**il comprend une étape préliminaire de traitement du mandrin souple (31) au moyen d'un démoulant liquide.

3. Procédé selon l'une des revendications précédentes, **caractérisé en ce qu'**il comprend encore, après l'étape c) de déformation de la préforme découpée (30b), une étape c') de positionnement d'un élément de remplissage (28) au niveau de l'autre (27a) des première et seconde extrémités ouvertes (27a, 27b), les étapes h) de positionnement du mandrin souple (31) et i) de retrait du mandrin souple (31) se faisant par l'extrémité ouverte opposée (27b).

4. Procédé selon la revendication précédente, **caractérisé en ce qu'**il comprend encore, après l'étape c') de positionnement d'un élément de remplissage (28) au niveau de ladite l'autre (27a) des première et seconde extrémités ouvertes (27a, 27b), une étape c") de positionnement d'une contre-plaque (29) au niveau de l'autre (27a) des première et seconde extrémités ouvertes (27a, 27b).

5. Procédé selon l'une des revendications précédentes, **caractérisé en ce qu'**il comprend une étape j) de fermeture de l'une (27b) des première et seconde extrémités ouvertes (27a, 27b) de la pièce creuse (16) en composite.

6. Procédé selon la revendication précédente, dans lequel l'étape j) de fermeture de l'une (27b) des première et seconde extrémités ouvertes (27a, 27b) de la pièce creuse (16) est réalisée par bouchage au moyen d'une résine à froid.

7. Procédé selon la revendication 5, dans lequel l'étape j) de fermeture de l'une (27b) des première et seconde extrémités ouvertes (27a, 27b) de la pièce creuse (16) est réalisée par collage d'une contre-plaque préformée en composite.

8. Elément aubagé profilé, tel qu'une aube (16) de stator, pour un ensemble propulsif (1), **caractérisé en ce qu'**il est obtenu selon le procédé de l'une quelconque des revendications 1 à 7.

## Patentansprüche

1. Fertigungsverfahren eines Hohlteils (16) aus Verbundmaterial für eine Luftfahrzeug-Turbomaschine, wobei dieses Verfahren die folgenden Schritte umfasst:
a) Herstellen eines Vorformlings (30a) durch Weben von Fäden in drei Dimensionen;
b) Zuschneiden des gewebten Vorformlings (30a) derart, dass eine interne Trennung (26) hergestellt wird;
c) Verformen des zugeschnittenen Vorformlings (30b) derart, dass eine Öffnung (27) ausgehend von der internen Trennung (26) eingerichtet wird, wobei der verformte Vorformling (30c) dabei ein erstes offenes Ende (27a) und ein zweites offenes Ende (27b), das dem ersten Ende (27a) entgegengesetzt ist, umfasst;
d) Platzieren des verformten Vorformlings (30c) in eine Spritzgussform;
e) Injizieren in die Spritzgussform eines Bindemittels, das ein Harz umfasst, um den gesamten verformten Vorformling (30c) zu imprägnieren;
f) Polymersieren des Harzes; und
g) Herausnehmen eines Verbundmaterialteils (16) aus der Form;
h) Positionieren eines biegsamen Dorns (31), der eine vorbestimmte Form aufweist, in der Öffnung (27), die in dem verformten Vorformling (30c) eingerichtet ist, ausgehend von einem (27b) des ersten und des zweiten offenen Endes (27a, 27b) vor dem Einspritzschritt e) des Harzes;
i) Herausziehen des biegsamen Dorns (31) ausgehend von einem (27b) des ersten und des zweiten offenen Endes (27a, 27b) nach dem Polymerisationsschritt f) des Harzes oder nach dem Abformschritt g), wobei das Verbundmaterialteil (16) dabei einen hohlen Kern (25) aufweist.

2. Verfahren nach dem vorstehenden Anspruch, **dadurch gekennzeichnet** das es einen Vorabbehandlungsschritt des biegsamen Dorns (31) mittels eines flüssigen Trennmittels umfasst.

3. Verfahren nach einem der vorstehenden Ansprüche, **dadurch gekennzeichnet, dass** es noch nach dem Verformungsschritt c) des zugeschnittenen Vorformlings (30b) einen Positionierungsschritt c') eines Füllelements (28) auf der Ebene des anderen (27a) des ersten und des zweiten offenen Endes (27a, 27b) umfasst, wobei die Positionierungsschritte h) des biegsamen Dorns (31) und i) das Herausziehen des biegsamen Dorns (31) über das entgegengesetzte offene Ende (27b) erfolgen.

4. Verfahren nach dem vorstehenden Anspruch, **dadurch gekennzeichnet, dass** es noch nach dem Positionierungsschritt c') eines Füllelements (28) auf der Ebene des anderen (27a) des ersten und des zweiten offenen Endes (27a, 27b) einen Positionierungsschritt c") einer Gegenplatte (29) auf der Ebene des anderen (27a) des ersten und des zweiten offenen Endes (27a, 27b) umfasst.

5. Verfahren nach einem der vorstehenden Ansprüche, **dadurch gekennzeichnet, dass** es einen Schließschritt j) eines (27b) des ersten und des zweiten offenen Endes (27a, 27b) des Hohlteils (16) aus Verbundmaterial umfasst.

6. Verfahren nach dem vorstehenden Anspruch, wobei der Schließschritt j) des einen (27b) des ersten und des zweiten offenen Endes (27a, 27b) des Hohlteils (16) durch Verstopfen mittels eines Harzes im kalten Zustand durchgeführt wird.

7. Verfahren nach Anspruch 5, wobei der Schließschritt j) des einen (27b) des ersten und des zweiten offenen Endes (27a, 27b) des Hohlteils (16) durch Kleben einer verformten Gegenplatte aus Verbundmaterial.

8. Profilschaufelelement, wie eine Statorschaufel (16), für eine Antriebseinheit (1), **dadurch gekennzeichnet, dass** es gemäß dem Verfahren nach einem der Ansprüche 1 bis 7 erhalten wird.

## Claims

1. A method for manufacturing a hollow part (16) made of composite material for an aircraft turbomachine, the method comprising the following steps:
a) a preform (30a) is produced by three-dimensional weaving of threads;
b) said woven preform (30a) is cut so as to provide an internal separation (26);
c) said cut preform (30b) is deformed so as to provide an orifice (27) from the internal separation (26), the deformed preform (30c) then comprising a first open end (27a) and a second open end (27b) opposite the first end (27a);
d) said deformed preform (30c) is placed in an injection mould;
e) a binder comprising a resin is injected into said injection mould in order to impregnate the whole of the deformed preform (30c);
f) the resin is polymerised; and
g) a composite part (16) is extracted from the mould;
h) a flexible mandrel (31) having a predetermined shape is positioned in the orifice (27) provided in the deformed preform (30c) from one (27b) of the first and second open ends (27a, 27b) before the resin injection step e);
i) the flexible mandrel (31) is removed from one (27b) of the first and second open ends (27a, 27b) after the resin polymerisation step f) or after the demoulding step g), the composite part (16) then having a hollow core (25).

2. The method according to the preceding claim, **characterised in that** it comprises a preliminary step of treating the flexible mandrel (31) with a liquid release agent.

3. The method according to one of the preceding claims, **characterized in that** it further comprises, after the step c) of deforming the cut preform (30b), a step c') of positioning a gap filler (28) at the other (27a) of the first and second open ends (27a, 27b), the steps h) of positioning the flexible mandrel (31) and i) of removing the flexible mandrel (31) being carried out through the opposite open end (27b).

4. The method according to the preceding claim, **characterised in that** it further comprises, after the step c') of positioning a gap filler (28) at said other (27a) of the first and second open ends (27a, 27b), a step c") of positioning a counter plate (29) at the other (27a) of the first and second open ends (27a, 27b).

5. The method according to one of the preceding claims, **characterised in that** it comprises a step j) of closing one (27b) of the first and second open ends (27a, 27b) of the hollow composite part (16).

6. The method according to the preceding claim, wherein the step j) of closing one (27b) of the first and second open ends (27a, 27b) of the hollow part (16) is performed by plugging with a cold resin.

7. The method according to claim 5, wherein the step j) of closing one (27b) of the first and second open ends (27a, 27b) of the hollow part (16) is performed by bonding a preformed composite counter plate.

8. A profile bladed element, such as a stator vane (16), for a propulsion assembly (1), **characterised in that** it is obtained according to the method of any one of claims 1 to 7.
